# EUROPEAN PATENT APPLICATION

(11) **EP 4 462 838 A1**
(43) Date of publication of application: **13.11.2024**
(21) Application number: 22918273.8
(22) Date of filing: 02.11.2022
(51) Int. Cl.: H04W 12/06, H04W 76/10

(54) **NETWORK ACCESS METHOD AND APPARATUS**

(30) Priority: 05.01.2022 CN 202210014566
(71) Applicant: China Iwncomm Co., Ltd., Xi'an, Shaanxi 710075 (CN)
(72) Inventor: TIAN, Yucun, Xi'an, Shaanxi 710075 (CN); XIAO, Long, Xi'an, Shaanxi 710075 (CN); ZHANG, Guoqiang, Xi'an, Shaanxi 710075 (CN); YAN, Xiang, Xi'an, Shaanxi 710075 (CN)
(74) Representative: Körfer, Thomas
(86) International application number: PCT/CN2022/129230
(87) International publication number: WO 2023/130821

(57) **Abstract**

A network access method and apparatus, relating to the technical field of communications. The method comprises: a terminal determining, according to a selected target network, an auxiliary network associated with the target network (S201); connecting the auxiliary network, and obtaining a digital certificate from the auxiliary network (S202), the digital certificate being used for accessing the target network; installing the digital certificate (S203); and accessing the target network by using the digital certificate (S204). According to the method, the digital certificate for accessing the target network is obtained on the basis of the auxiliary network, networking operation steps are simplified, and the usability is improved.

## Description

### Cross Reference to Related Application

This application claims priority to Chinese Patent Application No. 202210014566.4, filed to the China National Intellectual Property Administration on January 05, 2022 and entitled "NETWORK ACCESS METHOD AND APPARATUS", the entire contents of which are incorporated herein by reference.

### Technical Field

The application relates to the field of communication technologies, in particular to a network access method and an apparatus.

### Background

Wireless Local Area Network (WLAN) Authentication and Privacy Infrastructure (WAPI) is a wireless local area network security access technology. When a user operates a terminal to connect to a WAPI-certificate network, it is usually necessary to install a user certificate and an issuer certificate on the terminal for identity authentication during the network connection process. Taking the WAPI-certificate network in the wireless local area network as an example, the user controls the terminal to connect to a certificate server first, downloads and installs the user certificate and the issuer certificate, and when the terminal needs to connect to the WAPI-certificate network, the network configuration and connection are performed based on the installed digital certificate. The operations by the user are cumbersome. Wifi-certificate network has the same problem. The cumbersome operations by the user prevent a more secure certificate network from spreading.

Therefore, how to simplify the network access operation based on the digital certificate is a technical problem to be solved at present.

### Summary

Embodiments of the application provide a network access method and an apparatus for simplifying network access operations based on digital certificates.

In a first aspect, a network access method is provided. The method includes: according to a selected target network, a terminal determining an auxiliary network associated with the target network; connecting to the auxiliary network, and obtaining a digital certificate from the auxiliary network, and the digital certificate is used for accessing the target network; installing the digital certificate; and accessing the target network by using the digital certificate.

Optionally, the terminal determining the auxiliary network associated with the target network according to the selected target network includes: according to a selected first service set identifier (SSID), the terminal obtaining a second SSID associated with the first SSID; and the first SSID is an SSID of the target network, and the second SSID is an SSID of the auxiliary network.

Optionally, the terminal obtaining the second SSID associated with the first SSID according to the selected first SSID includes: based on a preset network name derivation rule, according to the selected first SSID, deriving the second SSID associated with the first SSID; and the network name derivation rule is pre-agreed by the terminal and an access device.

Optionally, the terminal obtaining the second SSID associated with the first SSID according to the selected first SSID includes: the terminal obtaining the second SSID associated with the first SSID from the access device by active scanning or passive scanning.

Optionally, the obtaining the digital certificate from the auxiliary network includes: obtaining a domain name of a certificate server in connection with the auxiliary network; obtaining an address of the certificate server according to the domain name of the certificate server; and downloading the digital certificate from the certificate server according to the address of the certificate server.

Optionally, the auxiliary network is isolated from the Internet.

Optionally, the obtaining the digital certificate from the auxiliary network includes: based on that a type of the auxiliary network is a pre-shared key type, popping up a password dialog; obtaining a password entered in the password dialog; and based on that a verification of the password is successful, obtaining the digital certificate from the auxiliary network.

Optionally, after obtaining the digital certificate from the auxiliary network, the method further includes: popping up a certificate naming dialog; obtaining a certificate alias set for the digital certificate entered in the certificate naming dialog; naming the digital certificate according to the certificate alias, and storing the named digital certificate.

Optionally, after obtaining the digital certificate from the auxiliary network, the method further includes: naming the digital certificate according to a default name.

Optionally, the digital certificate includes at least one of a user certificate, an issuer certificate, or a user private key.

In a second aspect, a terminal is provided. The terminal includes: a network access management module, a digital certificate management module, a digital certificate storage module, and a network connection module. The network access management module is configured to: according to a selected target network, determine an auxiliary network associated with the target network; call the network connection module to connect to the auxiliary network; obtain a digital certificate from the auxiliary network, and call the digital certificate management module to install the digital certificate; and call the network connection module to use the digital certificate to access the target network. The digital certificate management module is configured to install the digital certificate according to a calling request from the network access management module, and the digital certificate is used to access the target network. The digital certificate storage module is configured to store the digital certificate. The network connection module is configured to connect to the auxiliary network according to a calling request from the network access management module, and access the target network by using the digital certificate.

In a third aspect, a communication device is provided, including: a processor and a memory. The memory stores computer instructions, and the processor is configured to read the computer instructions and execute the method according to any one of the first aspect.

In a fourth aspect, a computer-readable storage medium is provided, the computer-readable storage medium stores computer-executable instructions, and the computer-executable instructions are used to cause a computer to execute the method according to any one of the first aspect.

In a fifth aspect, a computer program product is provided. The computer program product, when invoked by a computer, causes the computer to execute the method according to any one of the first aspect.

In the embodiments of the application, according to the selected target network, the terminal determines the auxiliary network associated with the target network, downloads and installs the digital certificate for accessing the target network based on the auxiliary network, so as to access the target network by using the digital certificate. There is no need for the user to operate the terminal to download the certificate from the certificate server, rather, the terminal automatically obtains the digital certificate from the auxiliary network associated with the target network and installs it automatically, and then accesses the target network based on the digital certificate, thus simplifying the network access based on digital certificates, and improving usability.

### Brief Description of Figures

FIG. 1 is a schematic diagram of an application scenario provided by an embodiment of the application.
FIG. 2 is a flow chart of a network access method provided by an embodiment of the application.
FIG. 3A is a schematic diagram of a user interface for a network list provided by an embodiment of the application.
Fig. 3B is a schematic diagram of an interface of a password dialog provided by an embodiment of the application.
FIG. 3C is a schematic diagram of another interface of the password dialog provided by an embodiment of the application.
FIG. 4 is a schematic diagram of an interface for naming a digital certificate provided by an embodiment of the application.
FIG. 5 is a schematic structural diagram of a terminal provided by an embodiment of the application.
FIG. 6 is a schematic diagram of an application scenario provided by an embodiment of the application.
FIG. 7 is a schematic structural diagram of a communication device provided by an embodiment of the application.

### Detailed Description

In order to make the purpose, technical solutions and advantages of the embodiments of the application clearer, the technical solutions of the embodiments of the application will be clearly and completely described below in conjunction with drawings of the embodiments of the application. Apparently, the described embodiments are some embodiments but not all embodiments of the application. Based on the described embodiments of the present disclosure, all other embodiments obtained by those ordinarily skilled in the art without creative work fall within the protection scope of the application.

Hereinafter, terms "first", "second" are only used for distinctive descriptions, and cannot be understood as implying or implying relative importance or implicitly specifying the quantity of indicated technical features. Therefore, the features defined as "first" and "second" may explicitly or implicitly include one or more of these features. In the description of the embodiments of the application, unless otherwise indicated, "at least one" means one or more.

Embodiments of the application will be described in detail below in conjunction with the drawings.

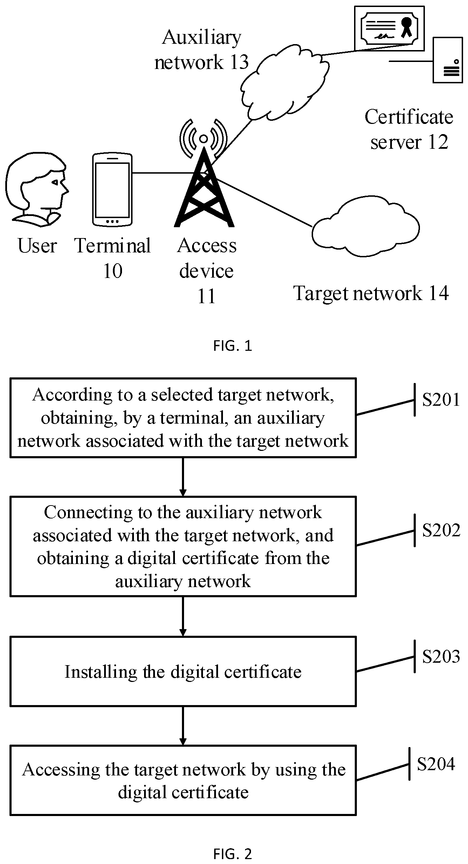

FIG. 1 is a schematic diagram of an application scenario provided by the embodiments of the application. As shown in the figure, there is a terminal 10, an access device 11, a certificate server 12, an auxiliary network 13, and a target network 14 in the scenario. The terminal 10 is connected with the access device 11 in a wireless or wired manner, and the access device 11 is connected with the certificate server 12 through the auxiliary network 13. Here, there may be multiple terminals, and the FIG. 1 only takes one terminal as an example.

The terminal 10 may be various forms of user equipment, such as a mobile station (MS), a terminal equipment and so on. Examples of some terminals are: a mobile phone, a tablet computer, a notebook computer, a mobile internet device (MID), a wearable device, a wireless terminal in self-driving, a wireless terminal in smart grid, a wireless terminal in smart home, etc.

The access device 11 is mainly used to provide network access, specifically may be an access router, an enterprise router, a home router, a wireless access point and other devices with network access functions. The access device 11 is coupled with the auxiliary network 13, and allows the terminal 10 to perform data interaction with the auxiliary network 13.

The certificate server 12 may be an enterprise server, a public network server, etc., and is used to provide digital certificate services and allows the users to obtain digital certificates. For example, the certificate server 12 is a server of a digital certificate authority, which can provide digital certificate application services to public users; for another example, the certificate server 12 is an enterprise server, which can provide digital certificate application services to users in the enterprise LAN. The digital certificate requested is the digital certificate within the enterprise, and may correspond to the identity of the user on the internal network of the enterprise.

In some application scenarios, the auxiliary network 13 may be an internal network of an enterprise, and the target network 14 may be an external network, such as the Internet. The certificate server 12 may be deployed in the internal network of the enterprise, and the terminal may access the certificate server 12 through the auxiliary network 13, and obtain a digital certificate for accessing the target network 14 from the certificate server 12.

In the embodiments of the application, the access device is taken as an example, and a service set identifier (SSID) of the target network and an SSID of the auxiliary network may be pre-configured in the access device. Here, the SSID is usually broadcast by the wireless access point, and the terminal may obtain the SSID in the current area through the scanning function built in its system. Optionally, the target network and the auxiliary network may be WLANs. For convenience of description, the SSID of the target network is referred to as the first SSID, and the SSID of the auxiliary network is referred to as the second SSID. The auxiliary network is connected with the certificate server, that is, the certificate server can be accessed through the auxiliary network. The second SSID is configured as a hidden SSID by the access device, and the second SSID will not be shown in the network list in the user interface of the terminal, that is, for the user, the auxiliary network is a hidden network and is not perceived by the user.

In some embodiments, such as in the enterprise network, just one certificate server can be configured to provide digital certificate download services to all terminals that need to use digital certificates for network access. In this case, the network corresponding to the second SSID in the access devices is connected to the certificate server, so that the terminal can access the certificate server.

Optionally, in the embodiments of the application, a network name derivation rule may be pre-configured on the terminal. Optionally, the network name derivation rule may be pre-agreed by the terminal and the access device, and the network name derivation rules are used to derive the second SSID based on the first SSID. Specifically, the terminal obtains the first SSID through scanning, and derives the second SSID according to the network name derivation rule and the first SSID.

Exemplarily, the network name derivation rule may be "second SSID=first SSID+@wapi-psk". For example, if the name of the first SSID is "WAPIEnterprise", then the name of the second SSID can be derived as "WAPIEnterprise+@wapi-psk" according to the above network name derivation rule. The network name derivation rule may also be other network name derivation rules, which are not limited in this application.

In addition, the embodiments of the application also provide a method for a terminal to obtain a second SSID associated with the first SSID, including: the terminal obtains the second SSID associated with the first SSID from an access device through active scanning or passive scanning.

Here, the terminal obtains the second SSID associated with the first SSID from the access device through active scanning, including:
the terminal scans a wireless network around the terminal by sending an inquiry request frame, and when a access device around the terminal receives the inquiry request frame, it returns an inquiry response frame as a response, and the inquiry response frame includes the first SSID and the second SSID associated to the first SSID. The first SSID is stored in an SSID information element of the inquiry response frame, and the second SSID is stored in a specific information element of the inquiry response frame. Usually, only the SSID stored in the SSID information element of the inquiry response frame will be shown in the network list of the user interface of the terminal. Since the second SSID in the embodiments is not stored in the SSID information element, the second SSID obtained by the terminal from the specific information element of the inquiry response frame will not be shown in the network list of the user interface of the terminal.

The process for the terminal to obtain the second SSID associated with the first SSID from the access device through passive scanning includes:
the terminal obtains the wireless network information around the terminal by monitoring a beacon frame periodically sent from the access device, and the beacon frame includes the first SSID provided by the access device and the second SSID associated with the first SSID; where, the first SSID is stored in an SSID information element of the beacon frame, and the second SSID is stored in a specific information element of the beacon frame. Usually, only the SSID stored in the SSID information element of the beacon frame will shown in the network list of the user interface of the terminal, and the second SSID in the embodiments is not stored in the SSID information element, so the second SSID obtained by the terminal from the specific information element of the beacon frame will not be shown in the network list of the user interface of the terminal.

FIG. 2 is a flow chart of a network access method provided by the embodiments of the application. The method can be executed by a terminal (such as the terminal 10 in FIG. 1). Through this process, the terminal can access the auxiliary network for downloading the digital certificate, and perform the operation of connecting to the target network through the digital certificate downloaded via the auxiliary network. As shown in the figure, the process includes the following steps.

S201: according to a selected target network, determining, by a terminal, an auxiliary network associated with the target network.

In this step, the terminal receives a signal sent by the access device, and the signal carries network identification information (such as SSID) for connection. The terminal displays the network identification information contained in the received signal in the network list of the user interface for the user to select one of the networks for network access. After the user selects a target network from the network list, the terminal obtains information of an auxiliary network associated with the target network, to obtain a digital certificate for accessing the target network through the auxiliary network.

Exemplarily, the terminal may obtain the first SSID carried in the signal sent by the access device, and display the first SSID in the network list. After the user selects the first SSID in the network list, if the terminal determines that the terminal has not installed a digital certificate for accessing the target network, or the installed digital certificate has expired (for example, the validity period has expired), the terminal obtains the second SSID associated with the first SSID, and connects to the auxiliary network through the second SSID to obtain a digital certificate for accessing the target network.

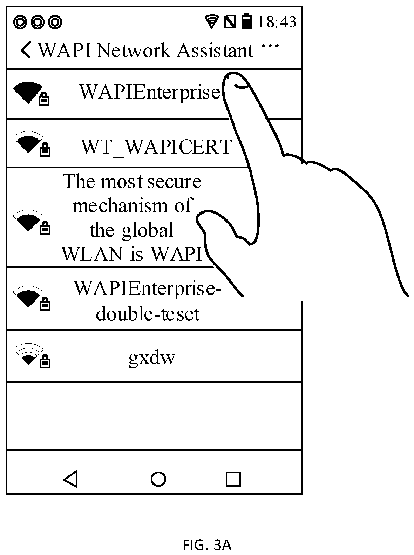

Exemplarily, FIG. 3A is a schematic diagram of a user interface of a terminal provided by the embodiments of the application. As shown in the figure, a network list is displayed on the user interface, and the network list includes the WLAN network name or SSID scanned by the terminal (such as, WAPIEnterprise, WT_WAPICERT, the most secure mechanism of the global WLAN is WAPI, WAPIEnterprise-double-teset, gxdw). If the user clicks on "WAPIEnterprise" in the list (that is, the first SSID in the embodiments of the application), it indicates that the user expects to access a corresponding WLAN or wireless access point, and access the Internet through the WLAN or wireless access point.

Optionally, the terminal may derive the second SSID associated with the first SSID according to the first SSID selected by the user based on a pre-configured network name derivation rule. The description of the network name derivation rule can be found in the above description.

S202: connecting, by the terminal, to the auxiliary network associated with the target network, and obtaining, by the terminal, a digital certificate from the auxiliary network. The digital certificate is used to access the target network as mentioned above.

Optionally, if a type of the auxiliary network is a pre-shared key type, in response to the operation of clicking on the first SSID from the user, the terminal pops up a password dialog, so that the user can enter a password for connecting to the auxiliary network. When the terminal uses the password to successfully connect to the auxiliary network, the terminal can access the certificate server, and download the digital certificate for accessing the target network from the certificate server.

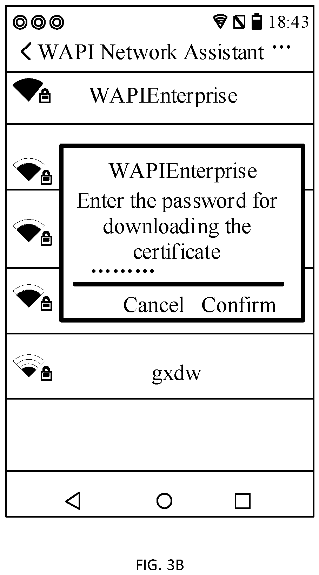

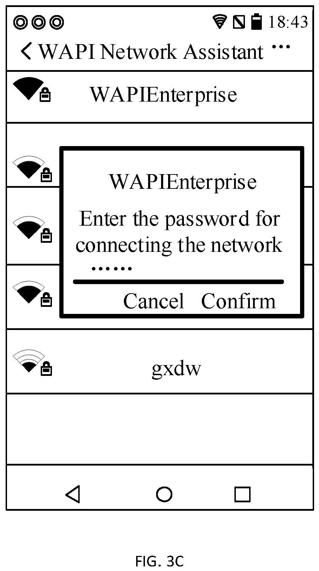

Exemplarily, FIG. 3B and FIG. 3C are schematic diagrams of the interface of the password dialog provided by the embodiments of the application. As shown in FIG. 3B and FIG. 3C, the first SSID or a name of the target network selected by the user (such as, the "WAPIEnterprise" in the figure) is displayed in the pop-up password dialog, the terminal responds to the password entered by the user in the password dialog, and if the password allows the terminal to successfully connect to the auxiliary network, the terminal can access the certificate server.

Optionally, there are many ways to obtain the password. For example, in an enterprise application scenario, the password may be notified to the employees of the enterprise through email or group message; for another example, in a friend's home, the password may be told to the user through oral communication; for another example, in a public place, the terminal may receive and display a short message including the password on the user interface. The application is not limited herein.

Optionally, if the type of the auxiliary network is an open type, the step of entering the password may be omitted. For example, the terminal, in response to an operation of clicking the SSID or network name of the target network on the user interface from the user, obtains the SSID or network name of the auxiliary network associated with the SSID or network name of the target network, and directly connects to the certificate server in connection with the auxiliary network according to the SSID or network name of the auxiliary network.

Optionally, the terminal may obtain a domain name of the certificate server in connection with the auxiliary network via the auxiliary network, obtain a corresponding IP address according to the domain name of the certificate server, and download the digital certificate from the certificate server according to the IP address.

Optionally, the digital certificate obtained by the terminal includes at least one of: a user certificate, an issuer certificate, or a user private key.

S203: installing, by the terminal, the digital certificate in the terminal, after obtaining the digital certificate.

In this step, after obtaining the digital certificate for accessing the target network, the terminal installs the digital certificate locally on the terminal.

In some embodiments, the name of the digital certificate includes two parts, where a first part is type information of the digital certificate, and a second part is an alias of the digital certificate. Optionally, the type information of the digital certificate is set by the system by default and cannot be modified. The alias of the digital certificate may be entered by the user or set by the system. If the default alias of the digital certificate is blank (empty string), it means that the digital certificate needs to be named by the user, and an interface for naming the digital certificate may be displayed for the user to enter the alias of the digital certificate. If the alias of the digital certificate is set by the system by default, it is also allowed to modify the alias of the digital certificate set by default. The alias of the digital certificate may also be set by the system by default and cannot be modified by the user.

Exemplarily, the rule for naming the user certificate is: "WAPI_USRCERT_" + digital certificate alias; for another example, the rule for naming the issuer certificate is: "WAPI_CACERT_" + digital certificate alias; for another example, the rule for naming the user private key is: "WAPI_USRPKEY_" + digital certificate alias.

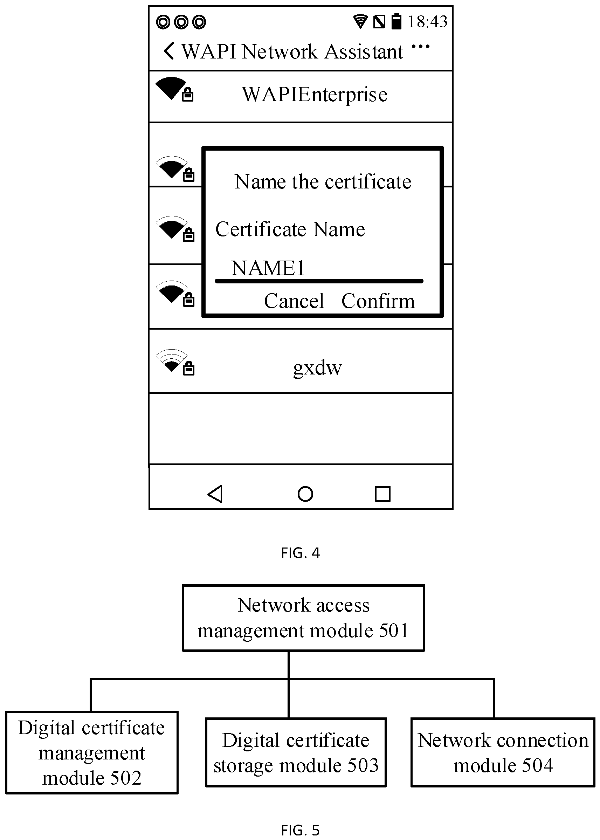

Fig. 4 exemplarily shows a schematic diagram of a n interface for naming digital certificate provided by the embodiments of the application. As shown in the figure, after the terminal downloads the digital certificate from the certificate server, a certificate naming dialog is popped up. According to the alias "NAME1" of the digital certificate entered by the user, the user certificate is automatically named "WAPI_USRCERT_NAME1" in the background, the issuer certificate is named "WAPI_CACERT_NAME1", and the user private key is named "WAPI_USRPKEY_NAME1".

In some embodiments, if the aliases of this set of digital certificates are not blank (the user is not allowed to enter or modify the alias of the digital certificate), the system will take the "default aliases of this set of digital certificates" as the "aliases of the digital certificate" to name the digital certificate. That is, the system can automatically complete the naming operation of the set of digital certificates according to the naming rules, and the user interface will no longer pop up the "certificate naming dialog", thus simplifying the interface operation steps.

S204: accessing, by the terminal, the selected target network by using the digital certificate.

In the embodiments, since the digital certificate downloaded and installed by the terminal based on the auxiliary network is a credential for accessing the target network, the terminal can use the digital certificate to access the target network.

In the embodiments of the application, the terminal determines the auxiliary network associated with the target network according to the selected target network, and installs a digital certificate for accessing the target network based on the auxiliary network, so as to access the target network by using the digital certificate. There is no need for the user to operate the terminal to download the certificate from the certificate server, rather, the terminal automatically obtains the digital certificate from the auxiliary network associated with the target network and installs it automatically, and then accesses the target network based on the digital certificate, thus simplifying the network access operation based on the digital certificate, and improving usability. That is, for the user, the embodiments of the application allows the user to use the certificate network with a sense of operation that is consistent with the operation mode that the user is most accustomed to in accessing the wireless local area network (for example, a wifi network with a password or without a password) at present, makes the user's access to the Internet more secure (because the certificate network is more secure than the password network or passwordless network of wifi).

Based on the same technical conception, embodiments of the application further provide a terminal, which can implement the above-mentioned method in the embodiments of the application.

FIG. 5 is a schematic diagram of a terminal provided by the embodiments of the application. As shown in the figure, the terminal includes: a network access management module 501, a digital certificate management module 502, a digital certificate storage module 503, and a network connection module 504.

The network access management module 501 is used to manage automatic operations of accessing an auxiliary network, downloading digital certificates from a certificate server, installing digital certificates, and accessing a target network. Exemplarily, the network access management module 501 is configured to: determine an auxiliary network associated with a target network according to a selected target network; call the network connection module 504 to connect to the auxiliary network; obtain a digital certificate from the auxiliary network, and call the digital certificate management module 502 to install the digital certificate; and call the network connection module 504 to use the digital certificate to access the target network.

The digital certificate management module 502 is mainly used to implement related functions of digital certificate management. Exemplarily, the digital certificate management module 502 is configured to install the digital certificate according to a calling request from the network access management module 501, and the digital certificate is used to access the target network.

The digital certificate storage module 503 is configured to store the digital certificate.

The network connection module 504 is configured to connect to the auxiliary network or access the target network using the digital certificate according to the calling request from the network access management module 501.

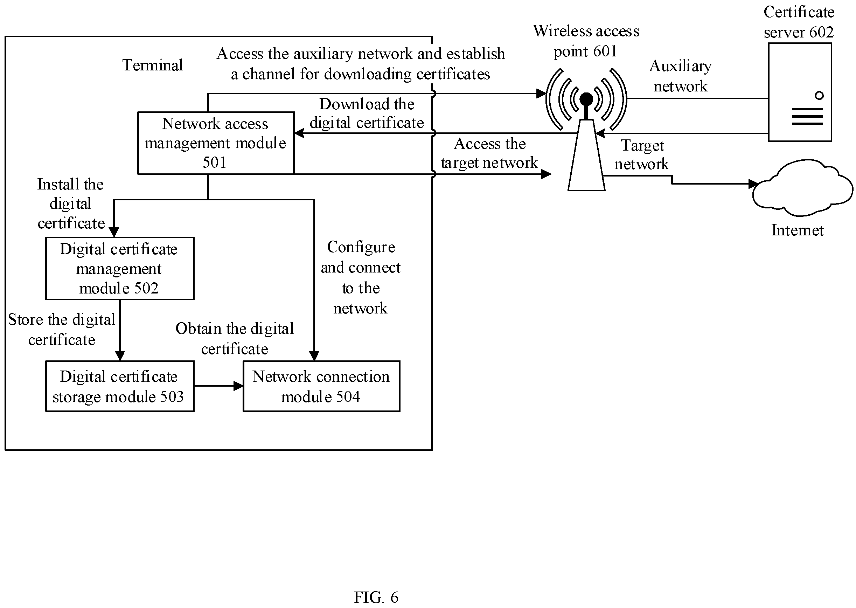

Based on the terminal shown in FIG. 5 above, FIG. 6 exemplarily shows a schematic diagram of an application scenario. In this application scenario, the target network is a WAPI-certificate network, and a digital certificate is required when accessing the WAPI-certificate network.

The network access management module 501, according to an SSID included in a signal sent from the wireless access point 601, lists networks available for connection in the network list; in response to a selection of "WAPIEnterprise" (taking WAPIEnterprise as the name of a WAPI certificate network as an example) by the user in the network list, the network access management module 501 obtains the name "WAPIEnterprise+@wapi-psk" of the auxiliary network associated with the "WAPIEnterprise" (see the above-mentioned embodiment for the specific acquisition method), and pops up a password dialog for the user to enter a password; the network access management module 501 sends parameters such as the name of the auxiliary network (WAPIEnterprise+@wapi-psk), network security type (WAPI pre-shared key type) and password to the network connection module 504, and calls the network connection module 504 to connect to the auxiliary network.

After the network access management module 501 detects that the network connection module 504 is connected to the auxiliary network, it obtains a domain name of the certificate server in connection with the auxiliary network, obtains a corresponding IP address based on the domain name of the certificate server, connects to the certificate server according to the IP address, a default port number, and the like, downloads the digital certificate from the certificate server 602, obtains user certificate data and user private key data from the downloaded user certificate, and obtains issuer certificate data from the downloaded issuer certificate.

The network access management module 501 calls the "install WAPI certificate" interface of the digital certificate management module 502, and provides interface parameters of this interface (user certificate data, issuer certificate data, user private key data, default aliases of this set of certificates). The digital certificate management module 502 receives a request of "install WAPI certificate", and verifies the matching of the digital certificate data after reading the interface parameters. If it does not match, the installation fails; if it matches, a certificate naming dialog is popped up for the user to enter the alias of the digital certificate. After the user enters the alias of the digital certificate, the digital certificate management module 502 uses the certificate alias to name the user certificate, issuer certificate, and user private key according to the preset naming rule, and calls the digital certificate storage module 503 to store the digital certificate. The digital certificate storage module 503 stores data of the set of digital certificates according to the naming rules preset by the digital certificate management module 502.

After the network access management module 501 detects that the digital certificate is successfully installed, it starts the steps of configuring and connecting to the WAPI certificate network:
the network access management module 501 will send network parameters such as the name of the target WAPI-certificate network (e.g., WAPIEnterprise), a network security type (e.g., the WAPI certificate type), a digital certificate selection mode (e.g., an automatic selection mode), a name of the selected certificate (e.g., the empty string), etc., to the network connection module 504, and calls the network connection module 504 to connect to the network. The network connection module 504 calls the digital certificate storage module 503 to obtain all digital certificates. A connection between the network connection module 504 and the wireless access point 601 is performed, and after the connection is successful, the network connection module 504 and the wireless access point 601 perform a protocol process of WAPI certificate type; upon receiving a first protocol packet (i.e., authentication activation packet) sent by the wireless access point 601, the network connection module 504 obtains the "identity of the local ASU" field (note: ASU indicates the authentication service unit/authentication server) in the packet, and then traverses the data of each set of digital certificates to obtain the "identity of the issuer" field of the certificate, to determine which set of digital certificates has the " identity of the issuer" field that matches with the "identity of the local ASU" field in the authentication activation packet, then the matching digital certificate is used for subsequent protocol interactions, and the WAPI-certificate network is accessed after the protocol process is completed. When the network access management module 501 detects that the network connection module 504 accesses the WAPI network, the user interface displays that WAPIEnterprise is connected.

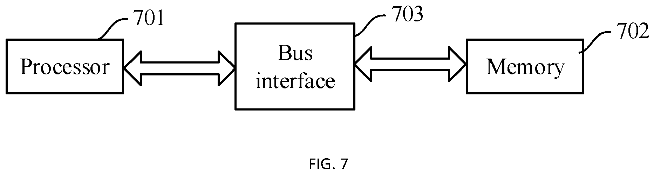

Based on the same technical conception, embodiments of the application further provide a communication device, which can implement the method provided in the above embodiments of the application. FIG. 7 illustrates a schematic structural diagram of the communication device provided by the embodiments of the application. As shown in the figure, the device may include: a processor 701, a memory 702 and a bus interface 703.

The processor 701 is responsible for managing the bus architecture and general processing, and the memory 702 can store data used by the processor 701 when performing operations.

The bus architecture may include any number of interconnected buses and bridges, in particular one or more processors represented by the processor 701 and various circuits of the memory represented by the memory 702 that are linked together. The bus architecture may also link together various other circuits such as a peripheral, a voltage regulator, and a power management circuit, etc., which are well known in the art, and therefore will not be further described herein. The bus interface provides the interface. The processor 701 is responsible for managing the bus architecture and general processing, and the memory 702 may store data used by the processor 701 when performing operations.

The process disclosed in the embodiments of the application may be applied to the processor 701 or implemented by the processor 701. In the implementation process, each step of the signal processing flow may be completed by an integrated logic circuit of hardware or an instruction in the form of software in the processor 701. The processor 701 can be a general-purpose processor, a digital signal processor, an application-specific integrated circuit, a field programmable gate array or other programmable logic device, a discrete gate or transistor logic device, or a discrete hardware component, and may implement or execute the methods, steps, and logic block diagrams of the application in the embodiments of the application. A general purpose processor may be a microprocessor or any regular processor or the like. The steps of the disclosed method in connection with the embodiments of the application may be directly implemented by a hardware processor, or implemented by a combination of hardware and software modules in the processor. The software module may be located in a mature storage medium in the field such as a random access memory, a flash memory, a read-only memory, a programmable read-only memory or an electrically erasable programmable memory, a register. The storage medium is located in the memory 702, and the processor 701 reads the information in the memory 702, and completes the steps of the information processing flow in combination with its hardware.

Specifically, the processor 701 is configured to read computer instructions in the memory 702 and execute the network access method in the embodiment of the application.

It should be noted that the above-mentioned communication device provided by the embodiments of the application may implement all the method steps implemented by the above-mentioned method embodiments, and may achieve the same technical effect. In the embodiments, the same parts and beneficial effects as the method embodiments will not be described in detail herein.

The embodiments of the application also provide a computer-readable storage medium, where computer-executable instructions are stored in the computer-readable storage medium, and the computer-executable instructions are used to cause a computer to execute the network access method in the above embodiments.

The embodiments of the application further provide a computer program product, which, when invoked by a computer, causes the computer to execute the network access method in the above embodiments.

Those skilled in the art should understand that the embodiments of the application may be provided as methods, systems, or computer program products. Accordingly, the application may take the form of an entirely hardware embodiment, an entirely software embodiment, or an embodiment combining software and hardware. Furthermore, the application may adopt the form of a computer program product implemented on one or more computer available storage media (including but not limited to a disk memory, a CD-ROM, an optical memory and the like) containing computer available program codes.

The application is described with reference to the flow charts and/or block diagrams of the method, apparatus (system), and computer program product according to the application. It should be understood that each flow and/or block in the flow charts and/or block diagrams and the combination of flows and/or blocks in the flow charts and/or block diagrams may be implemented by computer program instructions. These computer program instructions can be provided to processors of a general-purpose computer, a special-purpose computer, an embedded processor or other programmable data processing devices to generate a machine, so that instructions executed by processors of a computer or other programmable data processing devices generate an apparatus for implementing the functions specified in one or more flows of the flow charts and/or one or more blocks of the block diagrams.

These computer program instructions may also be stored in a computer-readable memory capable of directing a computer or other programmable data processing apparatus to operate in a specific manner, such that the instructions stored in the computer-readable memory generate a manufactured product including an instruction apparatus, and the instruction apparatus implements the functions specified in one or more flows of the flow charts and/or one or more blocks of the block diagrams.

These computer program instructions may also be loaded on a computer or other programmable data processing device, so that a series of operational steps are executed on the computer or other programmable device to produce a computer-implemented process, and thus, the instructions executed on the computer or other programmable devices provide steps for implementing the functions specified in one or more flows of the flow charts and/or one or more blocks of the block diagrams.

Obviously, those skilled in the art can make various changes and modifications to the application without departing from the spirit and scope of the application. In this way, if these modifications and variations of the application fall within the scope of the claims of the application and their equivalent technologies, the application is also intended to include these modifications and variations.

## Claims

1. A network access method, comprising:
determining, according to a selected target network, by a terminal, an auxiliary network associated with the target network;
connecting to the auxiliary network, and obtaining a digital certificate from the auxiliary network, wherein the digital certificate is used for accessing the target network;
installing the digital certificate; and
accessing the target network by using the digital certificate.

2. The method according to claim 1, wherein the determining, according to the selected target network, by the terminal, the auxiliary network associated with the target network, comprises:
obtaining, according to a selected first service set identifier, SSID, by the terminal, a second SSID associated with the first SSID; wherein the first SSID is an SSID of the target network, and the second SSID is an SSID of the auxiliary network.

3. The method according to claim 2, wherein the obtaining, according to the selected first SSID, by the terminal, the second SSID associated with the first SSID, comprises:
based on a preset network name derivation rule and according to the selected first SSID, deriving the second SSID associated with the first SSID;
wherein the network name derivation rule is pre-agreed by the terminal and an access device.

4. The method according to claim 2, wherein the obtaining, according to the selected first SSID, by the terminal, the second SSID associated with the first SSID, comprises:
obtaining, by the terminal, the second SSID associated with the first SSID from an access device by active scanning or passive scanning.

5. The method according to claim 1, wherein the obtaining the digital certificate from the auxiliary network comprises:
obtaining a domain name of a certificate server in connection with the auxiliary network;
obtaining an address of the certificate server according to the domain name of the certificate server; and
downloading the digital certificate from the certificate server according to the address of the certificate server.

6. The method according to any one of claims 1-5, wherein the auxiliary network is isolated from the Internet.

7. The method according to any one of claims 1-5, wherein the obtaining the digital certificate from the auxiliary network, comprises:
based on that a type of the auxiliary network is a pre-shared key type, popping up a password dialog;
obtaining a password entered in the password dialog; and
based on that a verification of the password is successful, obtaining the digital certificate from the auxiliary network.

8. The method according to any one of claims 1-5, wherein, after obtaining the digital certificate from the auxiliary network, further comprising:
popping up a certificate naming dialog;
obtaining a certificate alias set for the digital certificate entered in the certificate naming dialog;
naming the digital certificate according to the certificate alias; and
storing the digital certificate after naming.

9. The method according to any one of claims 1-5, wherein, after obtaining the digital certificate from the auxiliary network, further comprising:
naming the digital certificate according to a default name.

10. The method according to any one of claims 1-5, wherein the digital certificate comprises at least one of a user certificate, an issuer certificate, or a user private key.

11. A terminal, comprising: a network access management module, a digital certificate management module, a digital certificate storage module, and a network connection module; wherein
the network access management module is configured to: according to a selected target network, determine an auxiliary network associated with the target network; call the network connection module to connect to the auxiliary network; obtain a digital certificate from the auxiliary network, and call the digital certificate management module to install the digital certificate; and call the network connection module to use the digital certificate to access the target network;
the digital certificate management module is configured to install the digital certificate according to a calling request from the network access management module, wherein the digital certificate is used to access the target network;
the digital certificate storage module is configured to store the digital certificate; and
the network connection module is configured to connect to the auxiliary network according to a calling request from the network access management module, and access the target network by using the digital certificate.

12. A communication device, comprising: a processor, and a memory; wherein
the memory stores computer instructions; and
the processor is configured to read the computer instructions to execute the method according to any one of claims 1-10.

13. A computer-readable storage medium, wherein the computer-readable storage medium stores computer-executable instructions, and the computer-executable instructions are used to cause a computer to execute the method according to any one of claims 1-10.

14. A computer program product, when invoked by a computer, causing the computer to execute the method according to any one of claims 1-10.
